# EUROPEAN PATENT SPECIFICATION

(11) **EP 3 305 963 B1**
(45) Date of publication and mention of the grant of the patent: **05.01.2022**
(21) Application number: 17812296.6
(22) Date of filing: 11.07.2017
(51) Int. Cl.: D06F 37/06, D06F 23/02, D06F 23/06, D06F 37/04

(54) **WASHING MACHINE**
WASCHMASCHINE
MACHINE À LAVER

(30) Priority: 12.07.2016 KR 20160088041; 29.06.2017 KR 20170082273
(43) Date of publication of application: 11.04.2018
(73) Proprietor: Samsung Electronics Co., Ltd., Suwon-si, Gyeonggi-do 16677 (KR)
(72) Inventor: LEE, Jung-hee, Suwon-si Gyeonggi-do 16699 (KR); KANG, Jeong-hoon, Seoul 05504 (KR); HONG, Kwan-woo, Suwon-si Gyeonggi-do 16698 (KR); KIM, Min-sung, Yongin-si Gyeonggi-do 16960 (KR); KANG, Dae-uk, Suwon-si Gyeonggi-do 16683 (KR); KIM, Kyung-han, Suwon-si Gyeonggi-do 16682 (KR); HAN, Ju-bum, Seoul 04733 (KR)
(74) Representative: Walaski, Jan Filip
(86) International application number: PCT/KR2017/007419
(87) International publication number: WO 2018/012852

(56) References cited:
- EP-A1- 2 177 657
- EP-A1- 2 628 839
- EP-A2- 1 964 960
- CN-U- 203 420 126
- CN-U- 204 849 374
- JP-A- H09 266 998
- KR-A- 20000 024 965
- KR-A- 20130 095 604
- KR-A- 20150 105 092
- KR-B1- 100 644 823

## Description

### Technical Field

Apparatuses consistent with the present disclosure relate to a washing machine including a washing tub capable of improving a washing effect of the laundry.

### Background Art

In general, a washing machine is divided into a pulsator type washing machine and a drum type washing machine depending on a washing manner, and both of the pulsator type washing machine and the drum type washing machine include a water tub and a washing tub.

In the pulsator type washing machine, a driving shaft of the washing tub in which washing is performed is provided to be perpendicular to the ground. A pulsator generating a flow of washing water is installed at a lower portion of the washing tub. In the pulsator type washing machine, the pulsator agitates the laundry and the washing water injected into the washing tub together to remove dirty from the laundry, while the washing tub and the pulsator being rotated by a motor in a state in which the laundry and the washing water are injected into the washing tub.

In the drum type washing machine, washing is performed by head drop. A lifter for lifting the laundry is disposed in the washing tub.

In the pulsator type washing machine and the drum type washing machine, dehydrating holes allowing water of the water tub to be introduced into the washing tub and allowing the water of the washing tub to be drained from the washing tub at the time of drainage or dehydration are provided in a circumferential portion of the washing tub.

In the related art, the dehydrating holes are arranged in an inner surface of the washing tub that is flat. In this case, friction between the inner surface of the washing tub and the laundry is not large, such that there is a limitation in improving a washing effect by the friction.

In addition, in the drum type washing machine according to the related art, a case in which the laundry is gathered toward an inlet (front) in a washing or dehydrating process occurs, and a case in which the laundry is gathered toward the inlet is sandwiched and damaged in a diaphragm connecting a body and the water tub to each other or between a door and the inlet occurs.

EP 2628839, EP 2177657, CN 203420126 and EP 1964960 disclose washing machine drums having patterned drums.

### Technical Problem

The present disclosure provides a washing machine capable of improving a washing effect and dehydration efficiency.

The present disclosure also provides a washing machine capable of increasing a dehydration ratio by preventing a dehydration bottleneck phenomenon.

The present disclosure also provides a washing machine in which rigidity of a washing tub may be increased by continuously providing pattern sections on a surface of the washing tub.

The present disclosure also provides a washing machine capable of preventing the laundry from being gathered toward the front of a washing tub. Technical Solution

In accordance with the present invention, there is provided a washing machine according to claim 1. Optional features are set out in the dependent claims.

Other exemplary embodiments are set out in the following disclosure. It will be understood that exemplary embodiments that do not fall within the scope of the appended claims are exemplary and not covered by the claimed invention.

The recessed portions may be formed in a direction parallel with a driving shaft driving the washing tub.

The pattern may include a first pattern section and a second pattern section spaced apart from each other and arranged in a direction of the driving shaft, and the washing machine may further include at least one second dehydrating hole configured to be formed between the first pattern section and the second pattern section.

The first dehydrating holes are formed at both end portions of the recessed portion, respectively.

The recessed portion may be recessed from the inner circumferential surface of the washing tub toward the outside of the washing tub.

The first dehydrating holes are formed in a contact portion between the first inclined surface and the second inclined surface.

The recessed portion includes a connecting surface flatly connecting the first inclined surface and the second inclined surface to each other.

The first dehydrating holes are formed in the connecting surface.

The recessed portion may include a guide groove formed in the connecting surface, the first dehydrating hole may be positioned in the guide groove, and the guide groove may have a shape inclined toward the first dehydrating hole.

The recessed portions may be arranged in a direction inclined with respect to the driving shaft driving the washing tub.

The embodiments of a washing tub shown in figures 3-8 and figures 11-18 do not form part of the invention as defined in the claims.

### Description of Drawings

FIG. 1 is a cross-sectional view illustrating a washing machine according to an exemplary embodiment of the present disclosure;
FIG. 2 is an exploded perspective view illustrating a washing tub according to an exemplary embodiment of the present disclosure;
FIG. 3 is a plan view illustrating a state in which a washing tub according to an exemplary embodiment of the present disclosure is unrolled;
FIG. 4 is a cross-sectional view taken along line A-A' of FIG. 3;
FIG. 5 is a plan view illustrating a state in which a washing tub according to another exemplary embodiment of the present disclosure is unrolled;
FIG. 6 is a cross-sectional view taken along line B-B' of FIG. 5;
FIG. 7 is a plan view illustrating a state in which a washing tub according to still another exemplary embodiment of the present disclosure is unrolled;
FIG. 8 is a cross-sectional view taken along line C-C' of FIG. 7;
FIG. 9 is a plan view illustrating a state in which a washing tub according to the present invention is unrolled;
FIG. 10 is a cross-sectional view taken along line D-D' of FIG. 9;
FIG. 11 is a cross-sectional view illustrating a washing machine according to another exemplary embodiment of the present disclosure;
FIG. 12 is a perspective view of a washing tub illustrated in FIG. 11 when viewed from the front;
FIG. 13 is an exploded view of the washing tub illustrated in FIG. 12;
FIG. 14 is an enlarged view of a protruding portion illustrated in FIG. 13;
FIG. 15 is a partially enlarged perspective view of the washing tub illustrated in FIG. 12;
FIG. 16 is a cross-sectional view taken along line E-E of the washing tub illustrated in FIG. 15;
FIG. 17 is a perspective view of a washing tub according to yet still another exemplary embodiment of the present disclosure when viewed from the front; and
FIG. 18 is an exploded view of the washing tub illustrated in FIG. 17.

Hereinafter, exemplary embodiments of the present disclosure will be described in more detail. Exemplary embodiments to be described below will be described on the basis of exemplary embodiments most appropriate for understanding technical features of the present invention, and these exemplary embodiments do not limit the technical features of the present invention.

Therefore, the present disclosure may be variously modified without departing from the technical scope of the present invention as defined by the appended claims. In addition, to assist in the understanding of exemplary embodiments to be described below, components performing the same operations and related components in the respective exemplary embodiments will be denoted by the same or similar reference numerals throughout the accompanying drawings.

A drum washing machine will hereinafter be described by way of example, but the present disclosure is not limited thereto. That is, a configuration of a washing tub according to the present disclosure may also be applied to a top load-type automatic washing machine.

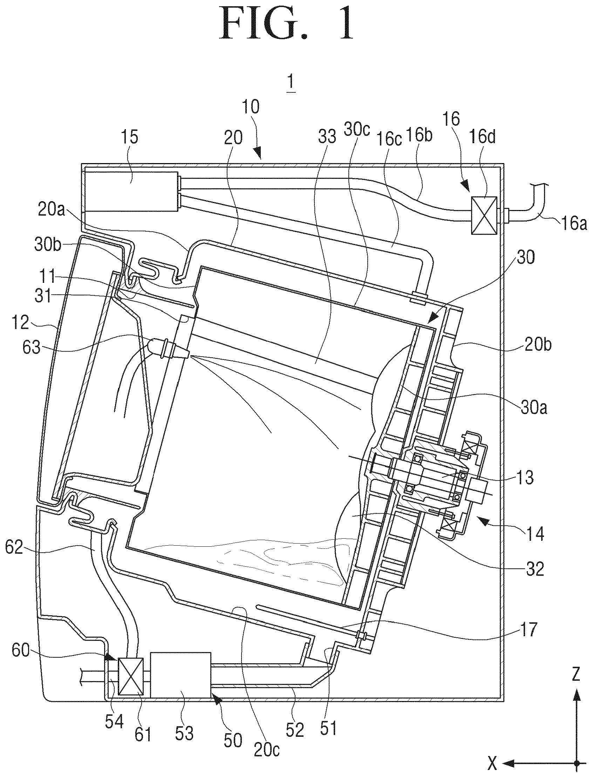

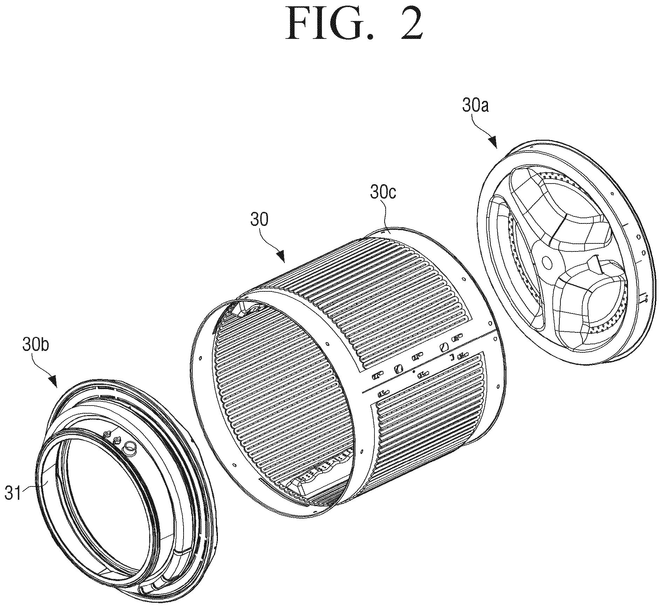

FIG. 1 is a cross-sectional view illustrating a washing machine according to an exemplary embodiment of the present disclosure, and FIG. 2 is an exploded perspective view illustrating a washing tub according to an exemplary embodiment of the present disclosure.

Referring to FIGS. 1 and 2, the washing machine according to the invention includes a body 10 having a front surface in which an inlet 11 for injecting the laundry is formed, a water tub 20 installed in the body 10 and storing washing water therein, and a washing tub 30 rotatably provided in the water tub 20 and accommodating the laundry therein. In addition, the washing machine includes a door 12 opening or closing the inlet 11 of the body 10.

The water tub 20 is installed to be inclined at an predetermined angle with respect to an installation surface of the washing machine 1 so that a front surface portion 20a thereof in which an inlet is formed is positioned to be higher than that of a rear surface portion 20b thereof, and the washing tub 30 disposed in the water tub 20 is also installed to be inclined in the same form as that of the water tub 20. However, the water tub and the washing tub are not limited thereto, but may also be installed not to be inclined.

The washing tub 30 is rotatably supported by a driving shaft 13 coupled to a rear surface portion 30a thereof and penetrating through the rear surface portion 20b of the water tub 20. In addition, a driving motor 14 rotating the driving shaft 13 is installed outside the rear surface portion 20b of the water tub 20. The driving motor 14 rotates the driving shaft 13, such that the washing tub 30 disposed in the water tub 20 may rotate. The driving motor 14 rotates the washing tub 30 at a low speed at the time of performing washing, and rotates the washing tub 30 at a high speed in one direction at the time of performing dehydration.

A detergent supplying device 15 for supplying a detergent to an inner portion of the water tub 20 and a water supplying device 16 for supplying washing water to the inner portion of the water tub 20 are installed above the water tub 20. The detergent supplying device 15 is installed at the front surface portion of the body 10. The water supplying device 16 includes a first water supplying pipe 16b connecting between an external water supplying pipe 16a and the detergent supplying device 15, a second water supplying pipe 16c connecting the detergent supplying device 15 and the water tub 20, and a water supplying control valve 16d installed on the first water supplying pipe 16b and controlling water supplying. This is to allow the water supplied to the inner portion of the water tub 20 to pass through the detergent supplying device 15 to allow the detergent to be supplied together with the water to the water tub 20.

A heater 17 heating the washing water of the water tub 20 is installed at a lower portion of an inner side of the water tub 20. A heater accommodating portion 20c protruding downwardly is provided at a lower portion of the water tub 20 to install the heater 17. This is to allow the washing water to be collected in the heater accommodating portion 20c while allowing the heater 17 to be accommodated in the heater accommodating portion 20c.

A water draining device 50 for draining the washing water of the water tub 20 and a washing water circulating device 60 for supplying the washing water in the water tub 20 into the washing tub 30 are installed below outside of the water tub 20. The water draining device 50 includes a first water draining pipe 52 connected to a drainage hole 51 installed at the lower portion of the water tub 20, a water draining pump 53 installed on the first water draining pipe 52, and a second water draining pipe 54 connected to an outlet of the water draining pump 53.

The washing water circulating device 60 includes a flow path switching valve 61 installed on the second water draining pipe 54 connected to the outlet of the water draining pump 53, a washing water circulating pipe 62 extended from the flow path switching valve 61 to an inlet 31 of the washing tub 30, and a spraying nozzle 63 installed at an outlet of the washing water circulating pipe 62. The flow path switching valve 61 may switch a flow path so that the washing water of the outlet of the water draining pump 53 is drained to the outside or flows to the washing water circulating pipe 62.

The flow path switching valve 61 may be a general electromotive three-way valve. This is to allow the washing water in the water tub 20 to be sprayed to an inner portion of the washing tub 30 through the first water draining pipe 52 and the washing water circulating pipe 62 when the water draining pump 53 is operated in a state in which the flow path switching valve 61 is operated so that the washing water flows to the washing water circulating pipe 62. When the water draining pump 53 is operated in a state in which the flow path switching valve 61 is operated so that the washing water flows to the second water draining pipe 54 guiding the washing water to the outside, the washing water of the water tub 20 is drained.

The washing tub 30 may have a cylindrical shape, and includes the rear surface portion 30a coupled to the driving shaft 13, a front surface portion 30b in which the inlet 31 is formed, and a circumferential portion 30c having both ends each coupled to the front surface portion 30b and the rear surface portion 30a and having a cylindrical shape. A plurality of lifters 33 lifting and dropping the laundry in the washing tub 30 when the washing tub 30 rotates are installed on an inner surface of the circumferential portion 30c of the washing tub 30, and a plurality of agitating protrusion 32 for improving washing force are formed on an inner surface of the rear surface portion 30a of the washing tub 30. In addition, a pattern 40 including one or more recessed portions 42 and one or more dehydrating holes 43 are arranged on an inner surface of the washing tub 30.

The inner surface of the circumferential portion 30c of the washing tub 30 configures an inner circumferential surface of the washing tub 30.

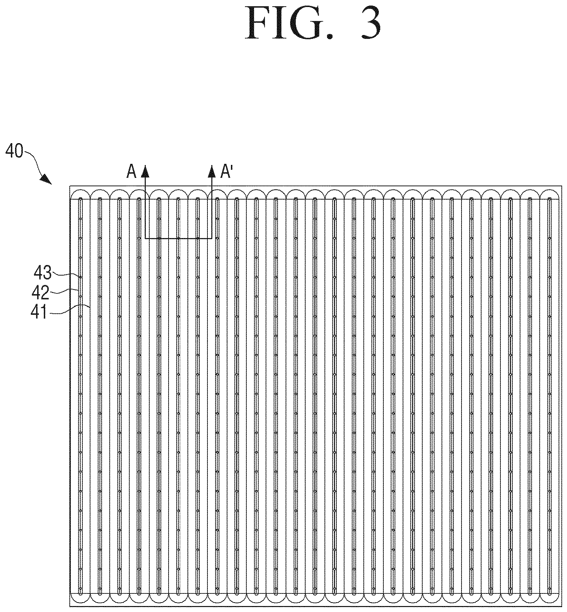

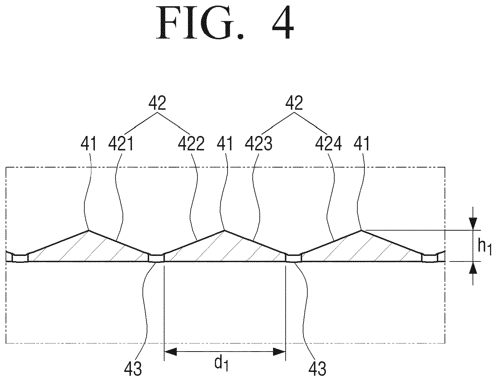

FIG. 3 is a plan view illustrating a state in which a washing tub according to an exemplary embodiment of the present disclosure is unrolled, and FIG. 4 is a cross-sectional view taken along line A-A' of FIG. 3. This embodiment is not part of the claimed invention.

Referring to FIGS. 3 and 4, at least one pattern 40 may be provided at an inner side of the washing tub 30 according to an exemplary embodiment of the present disclosure. Hereinafter, one pattern 40 will be mainly described, but an exemplary embodiment of a case in which a plurality of patterns 40 are provided will be described below.

The pattern 40 may include a plurality of recessed portions 42 formed in a length direction of the washing tub 30 in the inner circumferential surface of the washing tub 30. That is, the plurality of recessed portions 42 may be formed in the inner circumferential surface of the washing tub 30, and be arranged in the plural in a circumferential direction of the washing tub 30 to form the pattern 40. In addition, the respective recessed portions 42 are formed in the length direction of the washing tub 30.

The recessed portions 42 are extended from the front surface portion 30b in which the inlet 31 is formed to the rear surface portion 30a coupled to the driving shaft 13, and the washing tub 30 may include the recessed portions 42 and first dehydrating holes 43 formed in the recessed portions 42. The recessed portions 42 may have a length direction parallel with the driving shaft 13 driving the washing tub 30. In addition, the recessed portions 42 may be arranged in the plural in the circumferential direction of the washing tub 30.

As an example, the recessed portions 42 are recessed from the inner circumferential surface of the washing tub 30 toward the outside of the washing tub 30. In addition, the recessed portion 42 may be formed by a first inclined surface 421 inclined downwardly in the circumferential direction of the washing tub 30 and a second inclined surface 422 connected to the first inclined surface 421 and inclined upwardly in the circumferential direction of the washing tub 30. The first dehydrating holes 43 may be positioned at a contact portion at which the first inclined surface 421 and the second inclined surface 422 are connected to each other, and may be spaced apart from each other by the same interval and be provided in the plural, in the length direction of the recessed portion 42.

A third inclined surface 423, which has a shape corresponding to that of the first inclined surface 421, may be connected to the second inclined surface 422, and a fourth inclined surface 424, which has a shape corresponding to that of the second inclined surface 422, may be connected to the third inclined surface 423. That is, the recessed portions 42 may be continuously arranged in the circumferential direction of the washing tub 30.

The contact portion at which the second inclined surface 422 and the third inclined surface 423 are connected to each other may be defined as a protruding portion 41, and the protruding portion 41 may have a triangular shape. The protruding portion 41 may have a predetermined height h₁ in relation to a bottom surface (or an outer circumferential surface) of the washing tub 30. It is effective in improving a moisture content ((weight after washing - weight before washing)/weight before washing * 100 (%)) that the height of the protruding portion 41 satisfies at least 2mm or more.

In addition, a linear distance d₁ between the second inclined surface 422 and the third inclined surface 423 may have 20mm or more. In the case in which the linear distance d₁ is less than 20mm, a moisture content improving effect is slight, while in the case in which the linear distance d₁ is 20mm or more, a moisture content improving effect may be improved by about 3% or more.

In addition, frictional force between the laundry and the washing tub 30 may be increased through the pattern 40 including the protruding portions 41 having the triangular shape to improve a flow of the washing water, resulting in an increase in washing force.

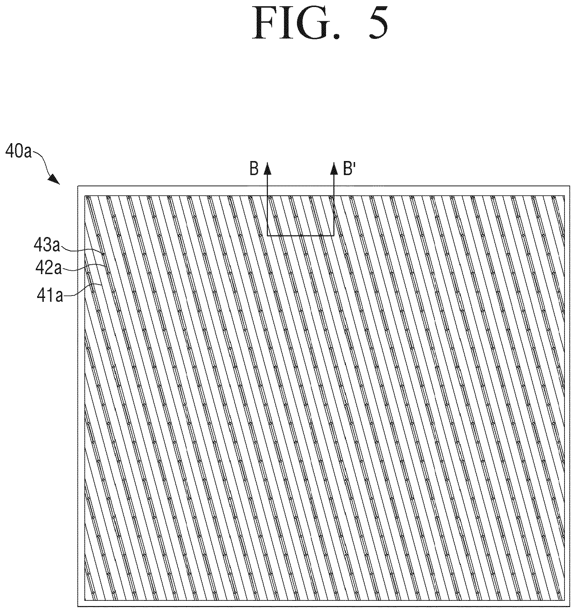

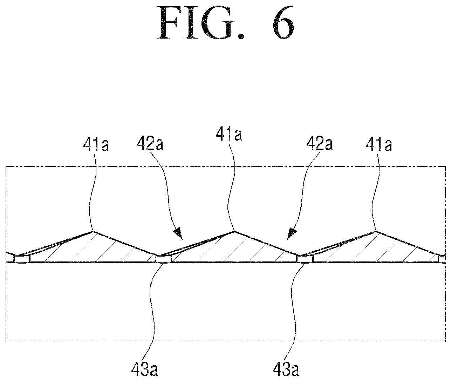

FIG. 5 is a plan view illustrating a state in which a washing tub according to another exemplary embodiment of the present disclosure is unrolled, and FIG. 6 is a cross-sectional view taken along line B-B' of FIG. 5. This embodiment is not part of the claimed invention. Hereinafter, contents different from those of the washing tub according to the exemplary embodiment of the present disclosure described with reference to FIGS. 1 to 4 will be mainly described, and contents for which a description is omitted may be replaced by the abovementioned contents.

Referring to FIGS. 5 and 6, at least one pattern 40a may be provided at an inner side of the washing tub 30 according to another exemplary embodiment of the present disclosure.

The pattern 40a according to another exemplary embodiment of the present disclosure may include recessed portions 42a extended from the front surface portion 30b in which the inlet 31 is formed to the rear surface portion 30a coupled to the driving shaft 13 and first dehydrating holes 43a formed in the recessed portions 42a. The recessed portions 42 may be arranged in a direction inclined with respect to the driving shaft 13 driving the washing tub 30. In addition, the recessed portions 42 may be spaced apart from each other and be formed in parallel with each other, in the circumferential direction of the washing tub 30. The first dehydrating holes 43a may be positioned in the recessed portions 42a. Protruding portions 41a may be provided between the recessed portions 42a, and cross sections of the protruding portions 41a may have a triangular shape.

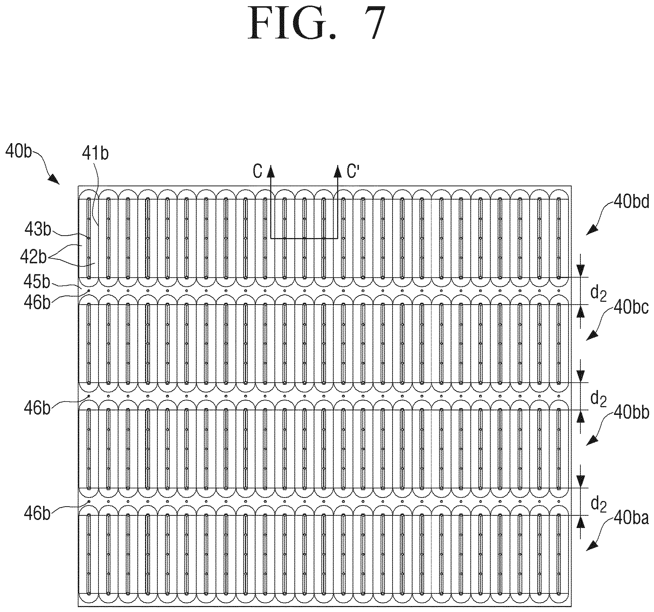

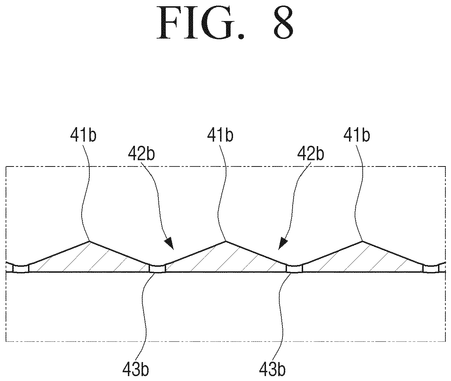

FIG. 7 is a plan view illustrating a state in which a washing tub according to still another exemplary embodiment of the present disclosure is unrolled, and FIG. 8 is a cross-sectional view taken along line C-C' of FIG. 7. This embodiment is not part of the claimed invention.

Referring to FIGS. 7 and 8, at least one pattern 40b may be provided at an inner side of the washing tub 30 according to still another exemplary embodiment of the present disclosure.

The pattern 40b according to still another exemplary embodiment of the present disclosure may include recessed portions 42b extended from the front surface portion 30b in which the inlet 31 is formed to the rear surface portion 30a coupled to the driving shaft 13 and dehydrating holes 43b formed in the recessed portions 42b. The recessed portions 42b may have a length direction parallel with the driving shaft 13 driving the washing tub 30. In addition, the recessed portions 42 may be formed in the plural in parallel with each other in the circumferential direction of the washing tub 30.

As an example, the recessed portions 42b may have a length less than 1/2 of lengths of the front surface portion and the rear surface portion of the washing tub 30, and in the case in which the recessed portions 42b have the length less than 1/2 of the lengths of the front surface portion and the rear surface portion of the washing tub 30, the recessed portions 42b may be spaced apart from each other and be arranged in the plural, in a direction of the driving shaft 13.

As an example, referring to FIG. 7, the recessed portions 42b may be spaced apart from each other and be arranged as four rows, in the direction of the driving shaft 13. Therefore, the pattern 40b may include a plurality of pattern sections. As an example, as illustrated in FIG. 7, the pattern 40b may include first to fourth pattern sections 40ba, 40bb, 40bc, and 40bd in the direction of the driving shaft 13. As described above, the respective recessed portions 42b are provided with the first dehydrating holes 43b. In addition, the first dehydrating holes 43b may be each formed at both end portions of the recessed portion 42b, and one or more first dehydrating holes 42b may be additionally provided at the same interval between the first dehydrating holes 42b each positioned at both end portions of the recessed portion 42b.

As an example, a first dehydrating hole 43b formed in the first pattern section 40ba and a first dehydrating hole 43b formed in the second pattern section 40bb, positioned to be closest to the first dehydrating hole 43b formed in the first pattern section 40ba may be positioned to be spaced apart from each other by a linear distance d₂ of 10mm or more. In addition, first dehydrating holes 43b formed in the second pattern section 40bb and the third pattern section 40bc and first dehydrating holes 43b formed in the third pattern section 40bc and the fourth pattern section 40bd may be positioned to be spaced apart from each other by linear distances d₂ of 10mm or more, respectively. The respective spaced linear distances d₂ between the first dehydrating holes 43b provided in the respective pattern sections 40ba, 40bb, 40bc, and 40bd may be the same as each other. This is to improve workability of the washing tub 30 and maintain strength of the washing tub 30.

In addition, separate second dehydrating holes 46b may be formed between the respective pattern sections 40ba, 40bb, 40bc, and 40bd. The separate second dehydrating holes 46b may be formed between the respective pattern sections 40ba, 40bb, 40bc, and 40bd to prevent a dehydration bottleneck phenomenon occurring since dehydration is concentrated on the first dehydrating holes 43b of a predetermined pattern, resulting in an increase in a dehydration ratio.

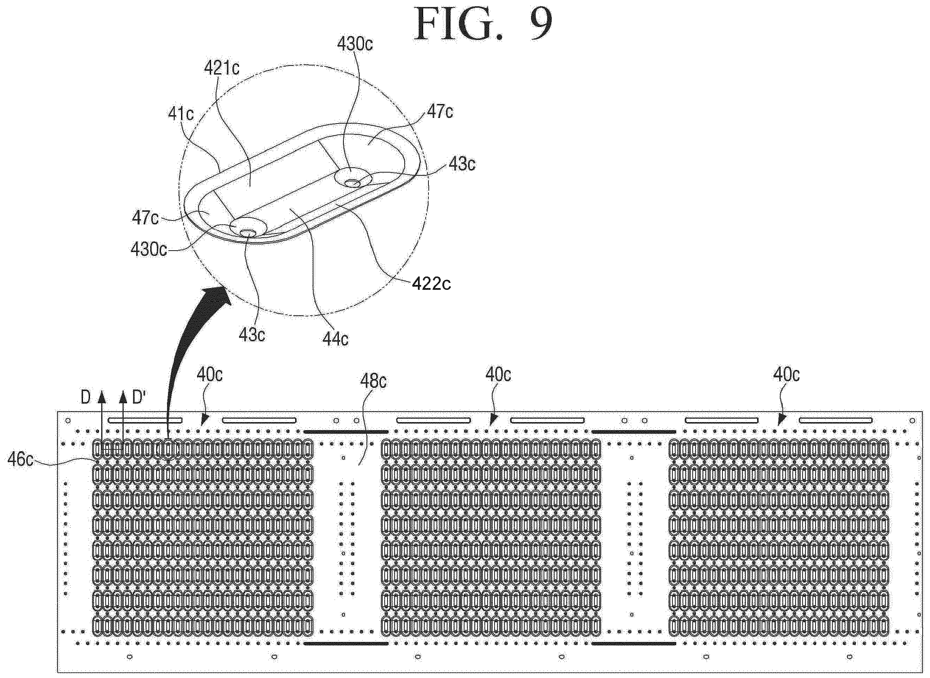

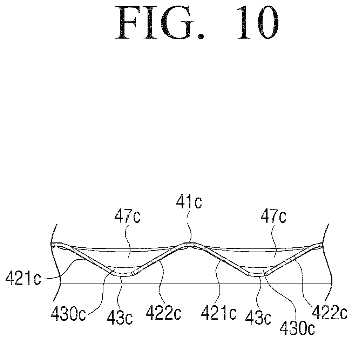

FIG. 9 is a plan view illustrating a state in which a washing tub according to the invention is unrolled, and FIG. 10 is a cross-sectional view taken along line D-D' of FIG. 9. Hereinafter, contents different from those of the washing tub described with reference to FIGS. 7 and 8 will be mainly described, and contents for which a description is omitted may be replaced by the abovementioned contents.

At least one pattern 40c is provided at an inner side of the washing tub 30.

Various accessories may be coupled to the inner side of the washing tub 30. Examples of the accessories may include the lifter 33 and a guide filter. The lifter 33 may be mainly used in a drum washing machine to smoothly move the laundry, and the guide filter may be mainly used in an automatic washing machine. Portions of the washing tub 30 to which these accessories are coupled are defined as coupled portions 48c.

The respective patterns 40c positioned at the inner side of the washing tub 30 may be positioned with the coupled portions 48 put as boundaries therebetween. That is, in the case in which the number of coupled portions 48c is one, two patterns 40c may be provided, and in the case in which the number of coupled portions 48c is two, three patterns 40c may be provided.

The pattern 40c includes recessed portions 42c extended from the front surface portion 30b in which the inlet 31 is formed to the rear surface portion 30a coupled to the driving shaft 13 and first dehydrating holes 43c formed in the recessed portions 42c. The recessed portions 42c may have a length direction parallel with the driving shaft 13 driving the washing tub 30. In addition, the recessed portions 42c may be formed in the plural in parallel with each other in the circumferential direction of the washing tub 30. The recessed portions 42c may be spaced apart from each other and be arranged in the plural, in the direction of the driving shaft 13.

Referring to FIGS. 9 and 10, the recessed portions 42c may be spaced apart from each other and be arranged as a plurality of rows, in the direction of the driving shaft 13. As an example, the recessed portions 42c may be arranged in eight rows in the direction of the driving shaft 13. As described above, the respective recessed portions 42c are provided with the first dehydrating holes 43. In addition, the first dehydrating holes 43c are each positioned at both end portions of the recessed portion 42c, and separate first dehydrating holes 43c may be further provided at the same interval between the first dehydrating holes 43c each positioned at both end portions of the recessed portion 42c. In addition, second dehydrating holes 46c may be formed between the respective recessed portions 42c.

The recessed portion 42c includes a first inclined surface 421c inclined downwardly in the circumferential direction of the washing tub 30, a second inclined surface 422c connected to the first inclined surface 421c and inclined upwardly in the circumferential direction of the washing tub 30, and a first connecting surface 44c flatly connecting the first inclined surface 421c and the second inclined surface 422c to each other. In addition, the recessed portion 42c further includes second connecting surfaces 47c each connecting between the first connecting surface 44c and the respective inclined surfaces 421c and 422c. A protruding portion 41c connecting the first inclined surface 421c and the second inclined surface 422c to each other may have a round shape.

The first dehydrating holes 43c are provided in the plural at both end portions of the first connecting surface 44c. Although not illustrated, the first dehydrating holes 43c may be additionally provided between the first dehydrating holes 43c each positioned at both end portions of the first connecting surface 44c.

Guide grooves 430c may be formed in the first connecting surface 44c. The guide groove 430c may be positioned to have an outer diameter greater than that of the first dehydrating hole 43c formed in the first connecting surface 44c and be concentric with the first dehydrating hole 43c. The guide groove 430 may have a shape of which a cross sectional area is decreased toward the first dehydrating hole 43c. As an example, a distance between an outer circumferential surface of the guide groove 430c and an outer circumferential surface of the first dehydrating hole 43c may be 1mm or more. The distance between the outer circumferential surface of the guide groove 430c and the outer circumferential surface of the first dehydrating hole 43c may be set to 1mm or more to improve a moisture content of the laundry by 1% or more.

That is, the washing machine 1 that may increase the washing force of the laundry and maximize dehydration efficiency of the laundry using the patterns 40, 40a, 40c, and 40c according the diverse exemplary embodiment of the present disclosure may be provided. In addition, the patterns 40, 40a, 40c, and 40c having an improved structure may be provided to maximize rigidity of the washing tub 30, such that a user may use the washing tub 30 and the washing machine 1 for a long period of time.

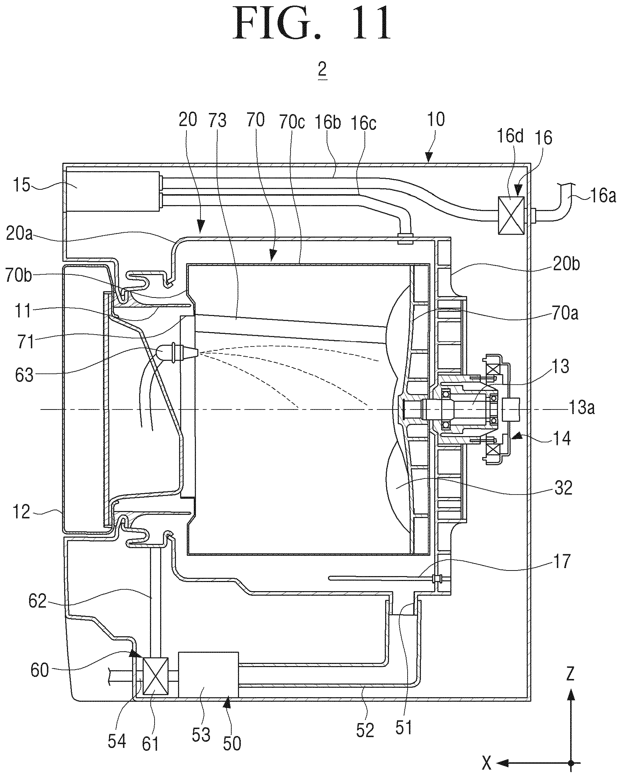

FIG. 11 is a cross-sectional view illustrating a washing machine 2 according to another exemplary embodiment of the present disclosure. This embodiment is not part of the claimed invention.

Since most of the structures of the washing machine 2 illustrated in FIG. 11 are similar to those of the washing machine 1 illustrated in FIG. 1, a description for contents overlapping those of the washing machine 1 illustrated in FIG. 1 will be omitted.

However, the washing machine 2 according to another exemplary embodiment of the present disclosure is different from the washing machine 1 illustrated in FIG. 1 in that a water tub 20 and a washing tub 70 disposed in a body 10 are disposed in a direction approximately horizontal to an installation surface of the washing machine 2.

However, as described above, disposition structures of the water tub 20 and the washing tub 70 are not limited thereto. That is, the water tub 20 and the washing tub 70 may be disposed to be inclined with respect to the installation surface of the washing machine 2 as in the washing machine 1 according to an exemplary embodiment of the present disclosure.

The washing machine 2 includes the body 10 having a front surface in which an inlet 11 for injecting the laundry is formed, the water tub 20 installed in the body 10 and storing washing water therein, and the washing tub 70 rotatably provided in the water tub 20 and accommodating the laundry therein.

The washing tub 70 is rotatably supported by a driving shaft 13 coupled to a rear surface portion 70a thereof and penetrating through the rear surface portion 20b of the water tub 20.

The driving shaft 13 is coupled to a driving motor 14. Therefore, the washing tub 70 may receive driving force of the driving motor 14 from the driving shaft 13 to rotate. The driving motor 14 rotates the washing tub 70 at a low speed in one direction or the other direction at the time of performing washing, and rotates the washing tub 70 at a high speed in one direction at the time of performing dehydration.

As described above, since the water tub 20 and the washing tub 70 are disposed in the direction horizontal to the installation surface of the washing machine 2, and the driving shaft 13 is also disposed in the direction horizontal to the installation surface of the washing machine 2. Therefore, a central axis line 13a of the driving shaft 13 may be parallel with the installation surface of the washing machine 2.

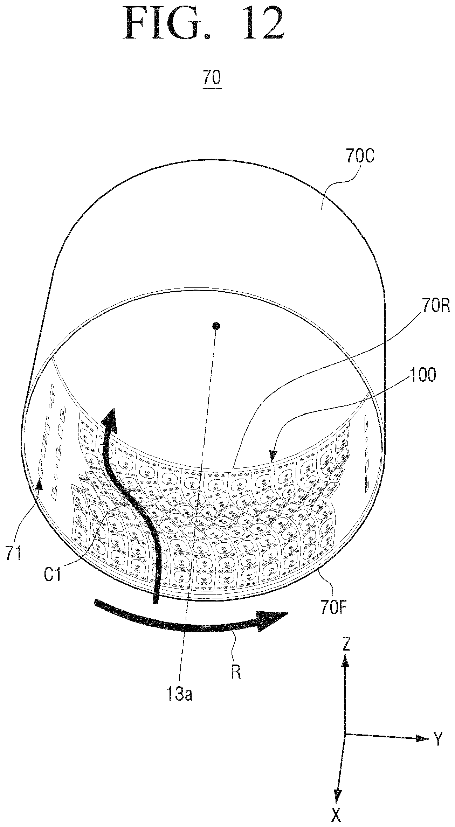

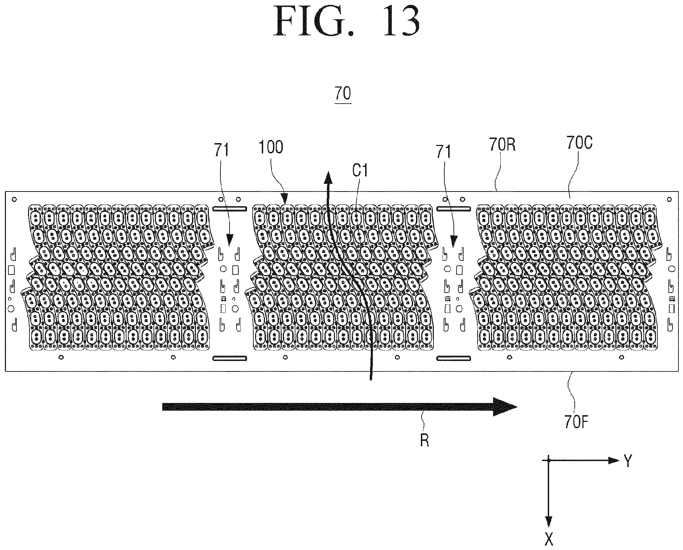

FIG. 12 is a perspective view of a washing tub 70 illustrated in FIG. 11 when viewed from the front, and FIG. 13 is an exploded view of the washing tub 70 illustrated in FIG. 12. This embodiment is not part of the claimed invention.

Hereinafter, the washing tub 70 according to yet still another exemplary embodiment of the present disclosure will be described with reference to FIGS. 11 through 13.

For convenience of explanation, a portion adjacent to a door 12 illustrated in FIG. 11 is defined as the front, and a portion adjacent to the driving motor 14 illustrated in FIG. 11 is defined as the rear. In addition, in illustrating the washing tub 70 in FIGS. 12 and 13, only a circumferential portion 70c having a plurality of protruding portions 100 formed on an inner surface thereof is illustrated, and a rear surface portion 70a and a front surface portion 70b that are omitted may be replaced, respectively, by the rear surface portion 30a and the front surface portion 30b illustrated in FIG. 2.

The washing tub 70 may have a cylindrical shape opened toward the front to be connected to the inlet 11 formed in the front surface of the washing machine 1. Since most of the configurations of the washing tub 70 are similar to those of the washing tub 30 illustrated in FIG. 2, a description for overlapping contents will be omitted.

The washing tub 70 includes the rear surface portion 70a coupled to the driving shaft 13, the front surface portion 70b in which an inlet 71 through which the laundry is injected is formed, and the circumferential portion 70c connecting the rear surface portion 70a and the front surface portion 70b to each other. In addition, a plurality of lifters 73 lifting and dropping the laundry depending on rotation of the washing tub 70 are installed on the inner surface of the circumferential portion 70c.

The inner surface of the circumferential portion 70c of the washing tub 70 configures an inner circumferential surface of the washing tub 70.

The inlet 71 of the washing tub 70 is connected to the inlet 11 formed in the front surface of the body 10. Therefore, the washing tub 70 may accommodate the laundry injected through the inlet 11 and the inlet 71 therein.

Referring to FIGS. 12 and 13, the washing tub 70 includes the plurality of protruding portions 100 protruding from the inner circumferential surface of the washing tub 70 toward an inner portion of the washing tub 70. In detail, the plurality of protruding portions 100 may be formed on the inner surface of the circumferential portion 70c to form a pattern. In describing a structure of the protruding portion 100, the inner circumferential surface of the washing tub 70 and the inner surface of the circumferential portion 70c indicate the same component, and may be used together.

The plurality of protruding portions 100 may be disposed in parallel with each other in the circumferential direction of the washing tub 70 to be easily in contact with the laundry injected into the washing tub 70.

The washing tub 70 includes a plurality of fastening portions 71 formed on the inner surface of the circumferential portion 70c and having the plurality of lifters 73 coupled thereto.

As illustrated in FIG. 13, the plurality of fastening portions 71 may be disposed, respectively, between the plurality of protruding portions 100 disposed in parallel with each other.

Therefore, the plurality of protruding portions 100 disposed in parallel with each other between the plurality of fastening portions 71 may configure the respective patterns, and the fastening portions 71 may be disposed between the respective patterns.

In addition, the plurality of fastening portions 71 include a plurality of fastening holes, respectively, and the plurality of lifters 73 may be coupled to the inner circumferential surface of the washing tub 70 through the fastening holes of the fastening portions 71 corresponding thereto, respectively.

Hereinafter, a structure of the plurality of protruding portions 100 will be described.

The respective protruding portions 100 protrude from the inner circumferential surface of the washing tub 70 toward the inner portion of the washing tub 70, and are extended from a portion of the inner circumferential surface of the washing tub 70 adjacent to the inlet 11 in a direction that becomes distant from the inlet 11.

In addition, the respective protruding portions 100 may be replaced by recessed portions concave from the inner circumferential surface of the washing tub 70 toward the outside. However, a case in which the respective protruding portions 100 protrude toward the inner portion of the washing tub 70 will hereinafter be described by way of example.

The plurality of protruding portions 100 protruding toward the inner portion of the washing tub 70 may have a shape in which they protrude inwardly from both ends of the respective protruding portions 100 in a width direction to be inclined upwardly, and surfaces of the respective protruding portions 100 may be curved surfaces.

The respective protruding portions 100 may be extended in the length direction of the washing tub 70. In addition, the respective protruding portions 100 may be extended from a front end 70F of the circumferential portion 70c adjacent to the inlet 11 to a rear end 70R of the circumferential portion 70c opposed to the front end 70F.

In addition, at least part of the respective protruding portions 100 are curved in a helix direction. The meaning that at least part of the respective protruding portions 100 are curved in the helix direction is that at least part of the respective protruding portions 100 are extended in a helix shape in the length direction of the washing tub 70 on the inner circumferential surface of the washing tub 70.

Therefore, the plurality of protruding portions 100 may interfere in the laundry in the washing tub 70, and move the laundry on the inner circumferential surface of the washing tub 70.

In detail, at least parts of the protruding portion 100 may be curved in the helix direction to move the laundry in the washing tub 70 in a desired direction in a process in which the washing machine 2 is operated in a dehydrating mode. As an example, the washing tub 70 according to exemplary embodiment of the present disclosure may be configured to rotate at a high speed in a counterclockwise direction at the time of performing the dehydration, and at least part of the respective protruding portions 100 may be configured to be curved in a right handed screw direction.

At least part of the respective protruding portions 100 are curved in the right handed screw direction, such that the laundry accommodated in the washing tub 70 may interfere in the plurality of protruding portions 100 and move from a portion adjacent to the inlet 11 in the direction that becomes distant from the inlet 11 along the plurality of protruding portions 100, during a period in which the washing tub 70 performs the dehydration of the laundry while rotating at the high speed in the counterclockwise direction. That is, the plurality of protruding portions 100 may guide the laundry accommodated in the washing tub 70 so that the laundry moves from the front end 70F of the washing tub 70 to the rear end 70R of the washing tub 70, at the time of performing the dehydration.

In addition, in the case in which the washing tub 70 is configured to rotate at a high speed in a clockwise direction at the time of performing the dehydration, at least part of the respective protruding portions 100 may be configured to be curved in a left handed screw direction to move the laundry in the washing tub 70 toward the rear end 70R of the washing tub 70 at the time of performing the dehydration.

In addition, it may be understood that at least part of the respective protruding portions 100 are curved in a direction opposed to a rotation direction of the washing tub 70.

The meaning that the plurality of protruding portions 100 are curved may be that portions or entirety of the plurality of protrusion portions 100 are curved while forming curved lines along the inner circumferential surface of the washing tub 70 formed as a curved surface.

In FIGS. 12 and 13, a rotation direction of the washing tub 70 rotating in the counterclockwise direction is denoted by an arrow "R", and a direction in which at least parts of the protruding portions 100 are curved in the right handed screw direction is denoted by an arrow "C1".

As described above, the rotation direction R of the washing tub 70 at the time of performing the dehydration may be set to the counterclockwise direction. In addition, the rotation direction R of the washing tub 70 rotating in the counterclockwise direction may be represented as a direction from the left toward the right in the exploded view of the washing tub 70 illustrated in FIG. 13.

As illustrated in FIG. 12, at least part of the protruding portions 100 may have a helix shape curved in the right handed screw direction.

In addition, in the case in which the washing tub 70 is viewed from the top of the front of the washing tub 70, it may be understood that the direction C1 in which the respective protruding portions 100 positioned at a lower portion of an inner side of the washing tub 70 are curved is the direction from the right toward the left. However, since the washing tub 70 rotates, in the case in which the washing tub 70 is viewed from the bottom of the front of the washing tub 70, a direction in which the respective protruding portions 100 positioned at an upper portion of the inner side of the washing tub 70 are curved is viewed as a direction from the left toward the right.

Referring to FIG. 13, in the washing tub 70 rotating in the counterclockwise direction, a rotation direction R of the circumferential portion 70c may be represented by the direction from the left toward the right in the exploded view of the washing tub 70.

In addition, the direction C1 in which the respective protruding portions 100 are curved may be represented to be inclined in the direction from the right toward the left. Therefore, it may be described that the direction in which at least part of the respective protruding portions 100 are curved is the direction opposed to the rotation direction of the washing tub 70.

In manufacturing the washing tub 70 according to yet still another exemplary embodiment of the present disclosure, the circumferential portion 70c may be manufactured by forming the plurality of protruding portions 100 curved in the direction C1 from the right toward the left on a metal plate having a rectangular shape and curving the metal plate on which the plurality of protruding portions 100 are formed in a cylindrical shape.

Therefore, at least part of the respective protruding portions 100 formed on the inner circumferential surface of the washing tub 70 having the cylindrical shape may be configured to be curved in the right handed screw direction to correspond to the washing tub 70 rotating in the counterclockwise direction, and the plurality of protruding portions 100 may move the laundry gathered toward the inlet 11 at the time of performing the dehydration toward the rear end 70R of the washing tub 70. However, it is preferable that the respective protruding portions 100 are curved in a level enough to move the laundry from the front end 70F of the washing tub 70 toward the rear end 70R of the washing tub 70 and preventing the laundry from being gathered toward the rear surface portion 70a of the washing tub 70. For example, in FIG. 13, the direction C1 in which at least part of the respective protruding portions 100 are curved may form an obtuse angle with respect to the rotation direction R of the washing tub 70, and the obtuse angle may exceed 90 degrees and be 135 degrees or less.

In addition, in describing a relationship between the rotation direction of the washing tub 70 at the time of performing the dehydration and the direction in which the protruding portions 100 are curved, the washing tub 70 may be divided into an upper portion and a lower portion on the basis of the central axis line 13a illustrated in FIG. 12.

In describing the washing tub 70 rotating the counterclockwise direction and the plurality of protruding portions 100 curved in the direction opposed to the rotation direction R of the washing tub 70, the respective protruding portions 100 positioned at the lower portion of the washing tub 70 move in the direction from the left toward the right, and at least part of the respective protruding portions 100 positioned at the lower portion of the washing tub 70 are curved in the direction from the right toward the left.

In addition, the protruding portions 100 positioned at the upper portion of the washing tub 70 move in the direction from the right toward the left, and at least part of the respective protruding portions 100 disposed at the upper portion of the washing tub 70 are curved in the direction from the left toward the right. However, since the washing tub 70 rotates around the central axis line 13a, the upper portion and the lower portion of the washing tub 70 described above are relative portions of the washing tub 70 that rotates.

Therefore, the meaning that at least part of the respective protruding portions 100 are curved in the direction opposed to the rotation direction R of the washing tub 70 may be that at least part of the respective protruding portions 100 are curved in a direction opposed to an instantaneous moving direction of the respective protruding portions 100 depending on rotation of the washing tub 70, and may also be that at least part of the respective protruding portions 100 are curved in the direction opposed to the rotation direction R of the washing tub 70 in an exploded view of the circumferential portion 70c.

As described above, the plurality of protruding portions 100 protruding on the inner circumferential surface of the washing tub 70 may be curved in the direction opposed to the rotation direction R of the washing tub 70 to move the laundry in the washing tub 70 that rotates in the direction that becomes distant from the inlet 11.

In addition, the plurality of protruding portions 100 may be continuously disposed in the circumferential direction of the washing tub 70 to effectively move the laundry that is in contact with the inner surface of the circumferential portion 70c and rotates from the front to the rear.

Therefore, the washing tub 70 including the plurality of protruding portions 100 may prevent the laundry from being moved and gathered toward the inlet 11 in washing and dehydrating processes, and prevent the laundry from being sandwiched and damaged in a gap between the inlet 11 and the door 12 or a diaphragm (not illustrated).

A structure moving the laundry from the front end 70F of the washing tub 70 to the rear end 70R of the washing tub 70 through the plurality of protruding portions 100 to prevent the laundry from being gathered and damaged toward the inlet 11 at the time of performing the dehydration is described by way of example in the abovementioned exemplary embodiments, but the present disclosure is not limited thereto. That is, the laundry in the washing tub 70 may move in a desired direction in a dehydrating process by changing the direction and a level in which at least part of the respective protruding portions 100 are curved.

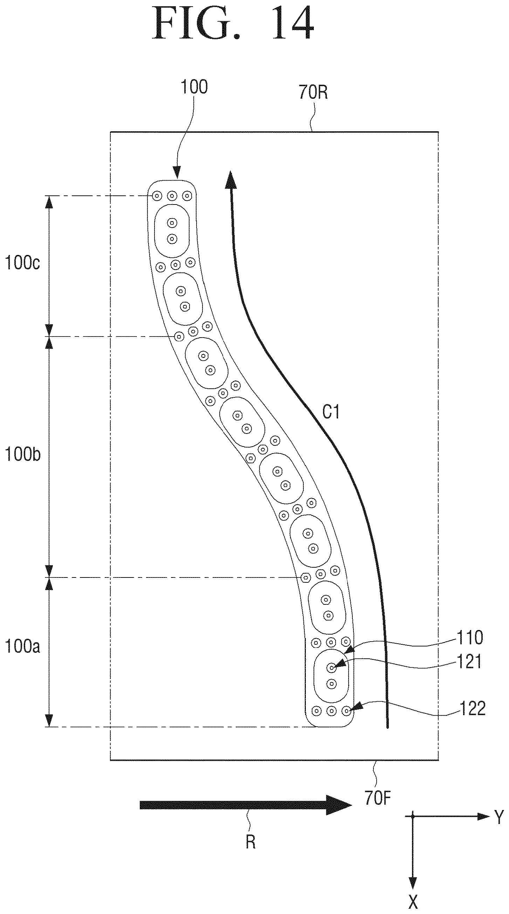

FIG. 14 is an enlarged view of a protruding portion 100 illustrated in FIG. 13.

Referring to FIG. 14, each protruding portion 100 includes a front end portion 100a adjacent to the inlet 11, a central portion 100b connected to the front end portion 100a, and a rear end portion 100c connected to the central portion 100b.

As illustrated in FIG. 14, the front end portion 100a of the protruding portion 100 adjacent to the inlet 11 may be a portion of the protruding portion 100 adjacent to the front end 70F of the washing tub 70, and the rear end portion 100c of the protruding portion 100 may be a portion of the protruding portion 100 adjacent to the rear end 70R of the washing tub 70.

In addition, the central portion 100b is curved in the helix direction. As an example, in the case in which the washing tub 70 is configured to rotate in the counterclockwise direction at the time of performing the dehydration, the central portion 100b may be configured to be curved in the right handed screw direction. That is, the central portion 100b is curved in the direction C1 opposed to the rotation direction R of the washing tub 70, and the front end portion 100a and the rear end portion 100c may be formed in parallel with a shaft (the driving shaft 13) of the washing tub 70.

As described above, the washing tub 70 may be configured to rotate in the counterclockwise direction at the time of performing the dehydration and the central portion 100b of the protruding portion 100 may be curved in the right handed screw direction to move the laundry interfering in the central portion 100b at the time of performing the dehydration toward the rear end portion 100c.

That is, the central portion 100b of each protruding portion 100 may be curved in the direction C1 opposed to the rotation direction R of the washing tub 70 to move the laundry in contact with the central portion 100b toward the rear end portion 100c.

In addition, the rear end portion 100c is formed in parallel with the driving shaft 13, such that the laundry moved to the rear end portion 100c may be moved forward and rearward on the rear end portion 100c. Therefore, the rear end portion 100c may disperse the laundry on the rear end portion 100c and prevent the laundry from being lumped or twisted on the rear surface portion 70a of the washing tub 70.

In addition, the front end portion 100a is also formed in parallel with the driving shaft 13, such that the laundry on the front end portion 100a may be dispersed. Therefore, the laundry on the front end portion 100a may more effectively enter the central portion 100b.

It is preferable that the central portion 100b of each protruding portion 100 is configured to be longer than the front end portion 100a and the rear end portion 100c to effectively guide movement of the laundry.

In addition, the entirety of each protruding portion 100 may be configured to be curved in the right handed screw direction without being divided into the front end portion 100a, the central portion 100b, and the rear end portion 100c, and the entirety of the protruding portion 100 may be configured to be curved in the direction C1 opposed to the rotation direction R of the washing tub 70. In addition, the protruding portion 100 may include only a front end portion 100a and a central portion 100b or only a central portion 100b and a rear end portion 100c.

However, a detailed structure of each protruding portion 100 is not limited to the example described above, but may be replaced by various structures in which the protruding portion 100 is curved so that the laundry moves from a portion adjacent to the inlet 11 in the direction that becomes distant from the inlet 11 along the protruding portion 100.

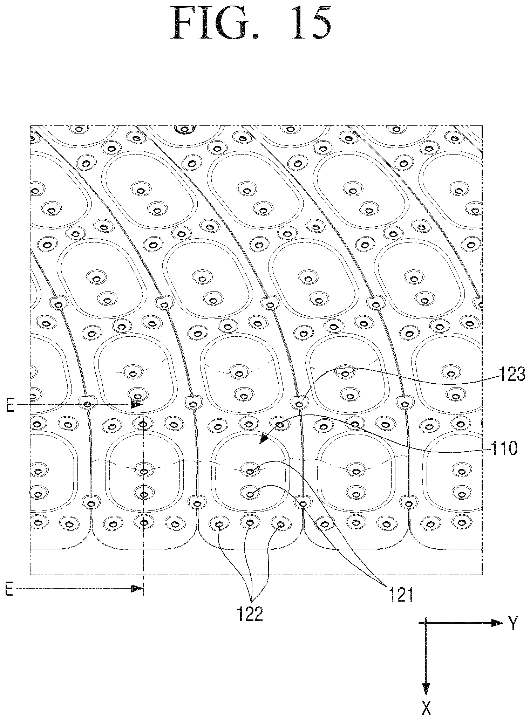

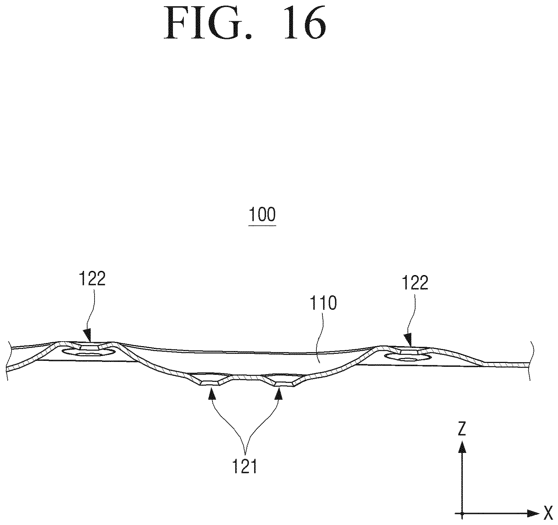

FIG. 15 is a partially enlarged perspective view of the washing tub 70 illustrated in FIG. 12, and FIG. 16 is a cross-sectional view taken along line E-E of the washing tub 70 illustrated in FIG. 15.

Referring to FIGS. 14 to 16, each protruding portion 100 includes a plurality of recessed portions 110 formed in the length direction of the protruding portion 100.

Each protruding portion 100 protrudes from the inner circumferential surface of the washing tub 70 toward the inner portion of the washing tub 70, and the plurality of recessed portions 110 formed in the protruding portion 100 are formed to be concave from the inner circumferential surface of the washing tub 70 toward the outside of the washing tub 70.

Therefore, in each protruding portion 100, the protruding portions protruding from the inner circumferential surface of the washing tub 70 and the recessed portions 110 concave from the inner circumferential surface of the washing tub 70 are sequentially disposed in the direction that becomes distant from the inlet 11. Therefore, the laundry may more effectively move from the inlet 11 in the direction that becomes distant from the inlet 11.

In addition, the respective recessed portions 110 may have an oval shape extended in the length direction of the protruding portion 100. Therefore, the laundry may more effectively move from the front of the washing tub 70 to the rear of the washing tub 70 along the plurality of protruding portion 100.

In addition, the washing tub 70 includes a plurality of dehydrating holes 121, 122, and 123 formed in the plurality of protruding portions 100.

In detail, the respective protruding portions 100 include at least one first dehydrating hole 121 formed in the recessed portions 110.

Water separated from the laundry in the dehydrating process may easily move to the recessed portions 110, and the water moving to the recessed portions 110 may be easily drained to the outside of the washing tub 70 through the first dehydrating holes 121.

Although a case in which two first dehydrating holes 121 are formed in each recessed portion 110 is illustrated by way of example in FIGS. 14 to 16, a size and the number of first dehydrating holes 121 formed in the recessed portion 110 may be variously modified.

In addition, the protruding portions 100 described above may be replaced by a plurality of recessed portions forming the pattern of the washing tub and formed to be concave from the inner circumferential surface of the washing tub. In this case, a plurality of protruding portions may be formed in each recessed portion extended in the length direction of the washing tub. In addition, the first dehydrating holes may be formed between an inner side of the recessed portion and an outer side of the protruding portion to easily drain the water moving to the inner side of the concave recessed portion.

In addition, the respective protruding portions 100 include at least one second dehydrating hole 122 formed between the plurality of recessed portions 110.

As illustrated in FIGS. 14 and 15, three second dehydrating holes 122 may be disposed in the width direction of the protruding portion 100, respectively, between the plurality of recessed portions 110.

The second dehydrating holes 122 may be formed between each recessed portion 110 formed in the protruding portion 100 and a recessed portion 110 adjacent to the recessed portion 110 to more effectively drain the water in the washing tub 70 to the outside.

In addition, the washing tub 70 includes at least one third dehydrating hole 123 formed between the plurality of protruding portions 100.

Since the plurality of protruding portions 100 formed on the inner circumferential surface of the washing tub 70 protrude toward the inner portion of the washing tub 70, spaces between the plurality of protruding portions 100 have a height lower than that of the protruding portions 100. Therefore, the water separated from the laundry in the dehydrating process may easily move between the plurality of protruding portions 100.

Therefore, the third dehydrating holes 123 formed between the plurality of protruding portions 100 may easily drain the water moving between the plurality of protruding portions 100 to the outside of the washing tub 70.

In addition, since the plurality of protruding portions 100 are continuously disposed in the circumferential direction of the washing tub 70, the third dehydrating holes 123 may be formed on a boundary between each protruding portion 100 and a protruding portion 100 adjacent to each protruding portion 100. In addition, a plurality of third dehydrating holes 123 may be disposed in the length direction of the protruding portions 100 on the boundaries between the plurality of protruding portions 100.

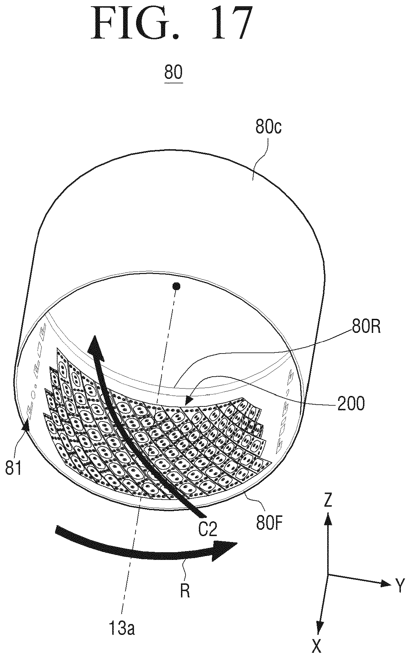

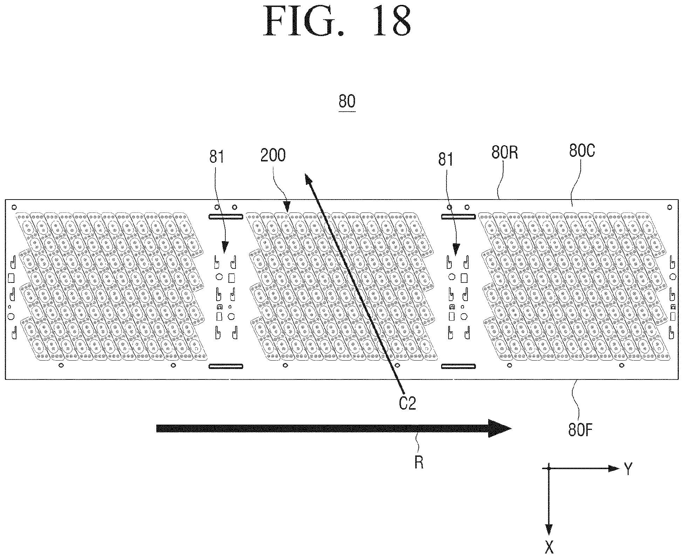

FIG. 17 is a perspective view of a washing tub 80 according to yet still another exemplary embodiment of the present disclosure when viewed from the front, and FIG. 18 is an exploded view of the washing tub 80 illustrated in FIG. 17. This embodiment is not part of the claimed invention.

Hereinafter, a structure of the washing tub 80 according to yet still another exemplary embodiment of the present disclosure will be described with reference to FIGS. 17 and 18. However, since most of the structures of the washing tub 80 illustrated in FIGS. 17 and 18 are the same as those of the washing tub 70 illustrated in FIGS. 12 and 13, a description for overlapping contents will be omitted.

The washing tub 80 includes a plurality of protruding portions 200 protruding on an inner surface thereof. The plurality of protruding portions 200 are formed on an inner surface of a circumferential portion 80c (an inner circumferential surface of the washing tub 80), and the respective protruding portions 200 are extended from a portion adjacent to the inlet 11 in the direction that becomes distant from the inlet 11.

In addition, it may be understood that at least part of the respective protruding portions 200 are curved in a helix direction and are curved in a direction C2 opposed to a rotation direction R of the washing tub 80.

In detail, as illustrated in FIG. 17, the rotation direction R of the washing tub 80 at the time of performing dehydration may be set to the counterclockwise direction, and at least parts of the protruding portions 200 are configured to be curved in the right handed screw direction.

In addition, the rotation direction R of the washing tub 80 rotating in the counterclockwise direction may be represented as a direction from the left toward the right in the exploded view of the washing tub 80 illustrated in FIG. 18. In addition, the respective protruding portions 200 may have a linear shape inclined in the direction opposed to the rotation direction R of the washing tub 80 in the exploded view of the circumferential portion 80c.

In manufacturing the washing tub 80 according to yet still another exemplary embodiment of the present disclosure, the circumferential portion 80c may be manufactured by forming the plurality of protruding portions 200 having the linear shape inclined in the direction C2 from the right toward the left on a metal plate having a rectangular shape and curving the metal plate on which the plurality of protruding portions 200 are formed in a cylindrical shape. Therefore, at least part of the respective protruding portion 200 formed on the inner surface of the washing tub 80 may be configured to be curved in the right handed screw direction to correspond to the washing tub 80 rotating in the counterclockwise direction, and the respective protruding portions 200 may be curved in the direction C2 opposed to the rotation direction R of the washing tub 70 rotating in the counterclockwise direction.

In addition, each of the plurality of protruding portions 200 formed on the inner surface of the washing tub 80 may have a helix shape extended from a front end 80F of the washing tub 80 toward a rear end 80R of the washing tub 80 in the direction opposed to the rotation direction of the washing tub 80.

Therefore, the plurality of protruding portions 200 formed on the inner surface of the washing tub 80 may move the laundry in the washing tub 80 from a portion adjacent to the inlet 11 in the direction that becomes distant from the inlet 11, and prevent the laundry from being sandwiched and damaged between the inlet 11 and the door 12.

In addition, each protruding portion 200 includes a plurality of recessed portions formed in the length direction of the protruding portion 200, and a water tub includes a plurality of dehydrating holes formed in an inner surface thereof.

Since structures of the plurality of recessed portions formed in each protruding portion 200 and the plurality of dehydrating holes are similar to those of the recessed portions 110 and the first to third dehydrating holes 121, 122, and 123 illustrated in FIG. 15, a description for overlapping contents will be omitted.

As described above, in the washing machine 2 according to another exemplary embodiment of the present disclosure, at least parts of the plurality of protruding portions 100 or 200 protruding on the inner surface of the washing tub 70 or 80 may be curved in the right handed screw direction (at least parts of the protruding portions 100 or 200 may be curved in the direction C2 opposed to the rotation direction R of the washing tub 70 or 80) to correspond to the washing tub 70 or 80 configured to rotate in the counterclockwise direction at the time of performing the dehydration to move the laundry adjacent to the inlet 11 in the direction that becomes distant from the inlet 11. Therefore, a phenomenon that the laundry in the washing tub 70 or 80 that rotates is gathered toward the inlet 11 to be sandwiched between the inlet 11 and the door 12 may be prevented.

In addition, the washing tub 70 or 80 may include the first and second dehydrating holes 121 and 122 each formed in the plurality of protruding portions 100 or 200 and the third dehydrating holes 123 formed between the plurality of protruding portions 100 to effectively improve a moisture content.

Although the diverse exemplary embodiments of the present disclosure have been individually described hereinabove, the respective exemplary embodiments are not necessarily implemented singly, but may also be implemented so that configurations and operations thereof are combined with those of one or more other exemplary embodiments.

In addition, specific exemplary embodiments have been illustrated and described hereinabove. However, the abovementioned exemplary embodiments may be variously modified by those skilled in the art to which the present disclosure pertains without departing from the scope of the present disclosure as defined by the appended claims.

## Claims

1. A washing machine comprising:
a body (10);
a water tub (20) in the body (10) for storing washing water;
a cylindrical washing tub (30) configured to be rotatably provided in the water tub (20), to accommodate laundry;
a plurality of recessed portions (42c) formed in an inner circumferential surface of the washing tub (30) and arranged in a circumferential direction of the washing tub (30) to form a pattern (40c); and
first dehydrating holes (43c) formed in the respective recessed portions (42c),
wherein the respective recessed portions (42c) are formed in a length direction of the washing tub (30), and
**characterised in that**:
each recessed portion (42c) includes a first inclined portion (421c) inclined downwardly in the circumferential direction of the washing tub (30), a second inclined portion (422c) inclined upwardly in the circumferential direction of the washing tub (30), a flat first connecting portion (44c) connecting the first inclined portion (421c) and the second inclined portion (422c) to each other, and second connecting portions (47c)
each connecting between the flat first connecting portion (44c) and the respective first inclined portion (421c) and second inclined portion (422c), and
the first dehydrating holes (43c) are formed in the flat first connecting portion (44c) and arranged such that one of the first dehydrating holes (43c) is provided at each end portion of the flat first connecting portion (44c).

2. The washing machine as claimed in claim 1, wherein the recessed portions (42c) are formed in a direction parallel with a driving shaft (13) driving the washing tub (30).

3. The washing machine as claimed in claim 2, wherein the pattern (40c) includes a first pattern section and a second pattern section spaced apart from each other and arranged in a direction of the driving shaft (13), and
the washing machine further comprises at least one second dehydrating hole (46c) configured to be formed between the first pattern section and the second pattern section.

4. The washing machine as claimed in claim 1, wherein the recessed portions (42c) are recessed from the inner circumferential surface of the washing tub (30) towards the outside of the washing tub (30).

5. The washing machine as claimed in claim 1, wherein each recessed portion (42c) includes guide grooves (430c) formed in the flat first connecting portion (44c) and arranged such that one of the guide grooves (430c) is provided at each end portion of the flat first connecting portion (44c),
one of the first dehydrating holes (43c) is positioned in each of the guide grooves (430c), and
the guide groove (430c) is tapered towards the first dehydrating hole (43c).

## Patentansprüche

1. Waschmaschine, umfassend:
einen Körper (10),
einen Wasserbottich (20) im Körper (10) zum Speichern von Waschwasser;
einen zylindrischen Waschbottich (30), der konfiguriert ist, um drehbar in dem Wasserbottich (20) bereitgestellt zu sein, um Wäsche aufzunehmen;
eine Vielzahl von vertieften Abschnitten (42c), die in einer Innenumfangsfläche des Waschbottichs (30) ausgebildet sind und in einer Umfangsrichtung des Waschbottichs (30) angeordnet sind, um ein Muster (40c) zu bilden; und
erste Entwässerungslöcher (43c), die in den jeweiligen vertieften Abschnitten (42c) ausgebildet sind, wobei die jeweiligen vertieften Abschnitte (42c) in einer Längsrichtung des Waschbottichs (30) ausgebildet sind, und
**dadurch gekennzeichnet, dass**:
jeder vertiefte Abschnitt (42c) einen ersten geneigten Abschnitt (421c), der in der Umfangsrichtung des Waschbottichs (30) nach unten geneigt ist, einen zweiten geneigten Abschnitt (422c), der in der Umfangsrichtung des Waschbottichs (30) nach oben geneigt ist, einen flachen ersten Verbindungsabschnitt (44c), der den ersten geneigten Abschnitt (421c) und den zweiten geneigten Abschnitt (422c) miteinander verbindet, und zweite Verbindungsabschnitte (47c) umfasst,
die jeweils zwischen dem flachen ersten Verbindungsabschnitt (44c) und dem jeweiligen ersten geneigten Abschnitt (421c) und zweiten geneigten Abschnitt (422c) verbinden, und
die ersten Entwässerungslöcher (43c) in dem flachen ersten Verbindungsabschnitt (44c) ausgebildet sind und so angeordnet sind, dass eines der ersten Entwässerungslöcher (43 c) an jedem Endabschnitt des flachen ersten Verbindungsabschnitts (44c) bereitgestellt ist.

2. Waschmaschine nach Anspruch 1, wobei die vertieften Abschnitte (42c) in einer Richtung parallel zu einer Antriebswelle (13) ausgebildet sind, die den Waschbottich (30) antreibt.

3. Waschmaschine nach Anspruch 2, wobei das Muster (40c) einen ersten Musterabschnitt und einen zweiten Musterabschnitt umfasst, die voneinander beabstandet und in einer Richtung der Antriebswelle (13) angeordnet sind, und
die Waschmaschine ferner mindestens ein zweites Entwässerungsloch (46c) umfasst, das konfiguriert ist, um zwischen dem ersten Musterabschnitt und dem zweiten Musterabschnitt ausgebildet zu sein.

4. Waschmaschine nach Anspruch 1, wobei die vertieften Abschnitte (42c) von der Innenumfangsfläche des Waschbottichs (30) zur Außenseite des Waschbottichs (30) vertieft sind.

5. Waschmaschine nach Anspruch 1, wobei jeder vertiefte Abschnitt (42c) Führungsnuten (430c) enthält, die in dem flachen ersten Verbindungsabschnitt (44c) ausgebildet sind und so angeordnet sind, dass eine der Führungsnuten (430c) an jedem Endabschnitt des flachen ersten Verbindungsabschnitts (44c) bereitgestellt ist,
eines der ersten Entwässerungslöcher (43c) in jeder der Führungsnuten (430c) positioniert ist, und
die Führungsnut (430c) zum ersten Entwässerungsloch (43c) verjüngt ist.

## Revendications

1. Machine à laver comprenant :
un corps (10) ;
une cuve à eau (20) dans le corps (10) destinée à stocker l'eau de lavage ;
une cuve de lavage cylindrique (30) conçue pour être disposée de manière rotative dans la cuve à eau (20), pour recevoir le linge ;
une pluralité de parties évidées (42c) formées dans une surface circonférentielle interne de la cuve de lavage (30) et agencées dans une direction circonférentielle de la cuve de lavage (30) pour former un motif (40c) ; et
des premiers trous d'essorage (43c) formés dans les parties évidées respectives (42c), lesdites parties évidées respectives (42c) étant formées dans la direction de la longueur de la cuve de lavage (30), et
**caractérisé en ce que** :
chaque partie évidée (42c) comprend une première partie inclinée (421c) qui est inclinée vers le bas dans la direction circonférentielle de la cuve de lavage (30), une seconde partie inclinée (422c) qui est inclinée vers le haut dans la direction circonférentielle de la cuve de lavage (30), une première partie de raccordement plate (44c) raccordant la première partie inclinée (421c) et la seconde partie inclinée (422c) l'une à l'autre, et des secondes parties de raccordement (47c) se raccordant chacune entre la première partie de raccordement plate (44c) et la première partie inclinée respective (421c) et la seconde partie inclinée (422c), et
les premiers trous d'essorage (43c) sont formés dans la première partie de raccordement plate (44c) et agencés de sorte que l'un des premiers trous d'essorage (43c) soit disposé au niveau de chaque partie d'extrémité de la première partie de raccordement plate (44c).

2. Machine à laver selon la revendication 1, lesdites parties évidées (42c) étant formées dans une direction parallèle à un arbre d'entraînement (13) entraînant la cuve de lavage (30).

3. Machine à laver selon la revendication 2, ledit motif (40c) comprenant une première section de motif et une seconde section de motif espacées l'une de l'autre et agencées dans une direction de l'arbre d'entraînement (13), et
ladite machine à laver comprenant en outre au moins un second trou de déshydratation (46c) conçu pour être formé entre la première section de motif et la seconde section de motif.

4. Machine à laver selon la revendication 1, lesdites parties évidées (42c) étant évidées à partir de la surface circonférentielle interne de la cuve de lavage (30) vers l'extérieur de la cuve de lavage (30).

5. Machine à laver selon la revendication 1, chaque partie évidée (42c) comprenant des rainures de guidage (430c) formées dans la première partie de raccordement plate (44c) et agencées de sorte que l'une des rainures de guidage (430c) soit disposée au niveau de chaque partie d'extrémité de la première partie de raccordement plate (44c),
l'un des premiers trous d'essorage (43c) étant positionné dans chacune des rainures de guidage (430c), et
ladite rainure de guidage (430c) étant effilée vers le premier trou d'essorage (43c).
